# EUROPEAN PATENT APPLICATION

(11) **EP 4 814 898 A1**
(43) Date of publication of application: **30.09.2026**
(21) Application number: 26162090.0
(22) Date of filing: 03.03.2026
(51) Int. Cl.: G06V 20/10, G01S 17/89

(54) **SYSTEMS AND METHODS FOR REAL-TIME MONITORING OF CLIMATE SMARTNESS OF AN URBAN FOREST REGION**

(30) Priority: 28.03.2025 IN 202521029882
(71) Applicant: Tata Consultancy Services Limited, Maharashtra (IN)
(72) Inventor: SAKKAN, Mariappan, 600113 Chennai, Tamil Nadu (IN); SARANGI, Sanat, 400601 Thane, Maharashtra (IN); MOHITE, Jayantrao, 400601 Thane, Maharashtra (IN); SINGH, Dineshkumar Jang Bahadur, 400601 Thane, Maharashtra (IN); PAPPULA, Srinivasu, 500081 Hyderabad, Telangana (IN); BALASUBRAMANIAN, Hemavathy, 600113 Chennai, Tamil Nadu (IN)
(74) Representative: Goddar, Heinz J.

(57) **Abstract**

Unlike natural forests, urban forestry presents a multifaceted approach for addressing climate change. However, these are extremely vulnerable to the impacts of climate change and severely hampered if forests do not follow sustainable forest management or are overused. Further, measuring and monitoring climate smartness of urban forest have certain challenges. Present disclosure provides systems and methods for real-time monitoring of climate smartness of an urban forest region. The climate smartness of the urban forest region is assessed using satellite and aerial images to monitor urban forest health indicators, field data on tree health, soil quality and biodiversity. Biomonitoring is done using indicator species to assesses ecological health of the urban forest region. Various indicators are computed to assesses the smartness of the urban forest using index that represents as an overall score to measure and monitor climate smartness of an urban forest in meeting the requirement of sustainable forest management.

## Description

### CROSS-REFERENCE TO RELATED APPLICATIONS AND PRIORITY

The present application claims priority to Indian application no. 202521029882 filed on March 28, 2025.

### TECHNICAL FIELD

The disclosure herein generally relates to climate smart forestry, and, more particularly, to systems and methods for real-time monitoring of climate smartness of an urban forest region.

### BACKGROUND

Urban forestry is indeed a powerful nature-based solution for mitigating climate change, and thus offers a range of environmental, social, and economic benefits. The Climate-Smart Forestry (CSF) is an integrated approach and combination of strategies and practices to capture and store carbon in trees and wood products, create community and forest resilience against the impacts of climate change, and prevent conversion of forests while sustainably supplying locally sourced wood products. CSF explicitly integrates the challenges and opportunities of climate change into forest policy, planning and practice. Forests and trees contribute to food security and livelihoods both indirectly, through the provision of ecosystem services (e.g. soil and water protection), and directly, through diets and nutrition, and the substantial contributions that wood and non-wood forest subsectors make to livelihoods.

Unlike natural forests, urban forestry presents a multifaceted approach for addressing climate change by improving carbon storage, air quality, and community resilience while providing social and economic benefits. Investment in urban green spaces is essential for sustainable urban development and climate change mitigation efforts.

Urban forests are extremely vulnerable to the impacts of climate change. The forest ecosystem can absorb and store one-tenth of the global carbon emission into its biomass, soil, and products. This absorption capacity is severely hampered if forests are not followed sustainable forest management or overused. Yet, measuring and monitoring climate smartness of urban forest across the world have certain challenges. For instance, (i) gathering accurate data on tree species, health, and growth is essential yet can be logistically difficult. Urban areas often have limited access to trees, and comprehensive assessments may require extensive field surveys, (ii) many entities (e.g., municipalities, government agencies, private agencies under government provisioned service contracts, and so on) may lack required funding, staff, or expertise necessary for effective monitoring. Urban forestry programs might be under-resourced, impacting the frequency and quality of monitoring activities, (iii) assessing the risk that climate change poses to the achievement of the management objectives of the climate smart urban forest is paramount in the present scenario in the urban and peri-urban areas, (iv) gathering information on policies, institutions and financial and technical incentives, the availability of support for undertaking adaptation measures, and the requirements for gaining access to such incentives and support, (v) one or more quantifiable indicators of climate smart urban forest indicators assessment using non-invasive and invasive method helping to move the forests towards a sustainable forest management of resources wherein there is lack in defined or standardized methods for assessing climate smart urban forest indicators in the world, (vi) climate smart urban forest indicators highly useful to the policy makers, financiers, pharma companies, wood companies and civil society to better understand sustainable forest and its viability, identify trends, set targets, monitor progress, and compare performance among regions and countries, etc., (vii) there may be a lack of standardized methods for measuring and monitoring urban forest health and its performance and such inconsistent methodologies can lead to data that is difficult to compare across time and locations for sustainable management, (viii) urban landscapes are constantly changing due to factors such as development, landscaping, and climate change and such dynamic environments can make it difficult to maintain accurate and up-to-date information about tree populations and its sustainable management, (ix) urban forest monitoring, which detects changes in forests health due to climate change, natural disturbances has become an essential element in understanding the climate change impacts in the city, (x) existing approaches does not consider how the Climate smart forest contribute to protect resources and efficiently over the past year, what tree species plant, what are all the sustainable tree care activities performed and practice affected the quality of soil to produce over the years, which pests interfered in the ecosystems, how the type and quantity of inputs affected the forest area, how much carbon was sequestered in the urban forest are the variable, and (xi) to guide, and suggest the policy makers, administrators and foresters with sufficient information on which to base decisions, adaptation strategies should include monitoring systems on climate, vegetation, fauna and essential non-biological components of urban forests, such as water availability. Monitoring systems are especially important in forestry because of the long-time lag between management actions and forestry ecosystem responses.

### SUMMARY

Embodiments of the present disclosure present technological improvements as solutions to one or more of the above-mentioned technical problems recognized by the inventors in conventional systems.

For example, in one aspect, there is provided a processor implemented method for real-time monitoring of climate smartness of an urban forest region. The method comprises receiving in real-time, via one or more hardware processors, an input data pertaining to an urban forest region from a plurality of sources, wherein the input data comprises (i) one or more satellite images, (ii) one or more drone images, (iii) Light Detection and Ranging (LiDAR) data, (iv) weather data from one or more weather stations, (v) soil moisture data, (vi) tree growth data, and (vii) Internet of Things (IoT) devices data; computing, via the one or more hardware processors, a plurality of indicators using the input data comprising computing a first indicator using a first index derived from the one or more satellite images, the one or more drone images and the tree growth data, wherein the first index represents a correlation with a vegetation health, a green biomass, a vegetation productivity, and an early indicator of a plant stress; compute a second indicator based on at least one of (i) a second index and (ii) an evenness of the second index using the one or more satellite images, and the LiDAR data; computing a third indicator based on an analysis of the soil moisture data, wherein the analysis of the soil moisture data comprises soil organic carbon in one or more decomposition stages; computing a fourth indicator based on a frequency of one or more adaptation practices derived from the IoT devices data, the one or more satellite images, and the one or more drone images; and computing a fifth indicator by using an Above Ground Biomass (AGB) and a Below Ground Biomass (BGB) being extracted from the second indicator and the weather data from one or more weather stations; and computing, via the one or more hardware processors, a climate smartness index of the urban forest region by using the plurality of indicators, wherein the climate smartness index indicates a percentage for classifying the urban forest region into at least one climate type.

In an embodiment, the AGB is computed using one or more diameter-breast-height (DBH) parameters measured from a pre-defined height above ground, and the BGB is computed based on a root-to-shoot relationship and the AGB.

In an embodiment, the fifth indicator represents a total carbon stock that is computed based on the AGB and the BGB.

In an embodiment, the fifth indicator represents an amount of carbon sequestrated by the urban forest region based on carbon being converted to carbon dioxide (CO2).

In an embodiment, the one or more satellite images comprises images of one or more forests captured from one or more satellites at one or more periodic intervals, the one or more drone images comprise information pertaining to at least a forest structure, and a tree health, wherein the LiDAR data comprises one or more three-dimensional (3D) maps of one or more forest canopies and a terrain created using one or more LiDAR laser pulses, the weather data from one or more weather stations comprises information pertaining to temperature, humidity, precipitation, and wind speed, the soil moisture data comprises information pertaining to a soil moisture level that provides water availability and soil health, the tree growth data comprises one or more tree growth rates measured by tracking one or more changes in an associated trunk diameter of one or more trees, and the IoT devices data comprises information of the urban forest region collected using one or more IoT sensors configured in the urban forest region.

In another aspect, there is provided a processor implemented system for real-time monitoring of climate smartness of an urban forest region. The system comprises: a memory storing instructions; one or more communication interfaces; and one or more hardware processors coupled to the memory via the one or more communication interfaces, wherein the one or more hardware processors are configured by the instructions to receive in real-time, an input data pertaining to an urban forest region from a plurality of sources, wherein the input data comprises (i) one or more satellite images, (ii) one or more drone images, (iii) Light Detection and Ranging (LiDAR) data, (iv) weather data from one or more weather stations, (v) soil moisture data, (vi) tree growth data, and (vii) Internet of Things (IoT) devices data; compute a plurality of indicators using the input data comprising computing a first indicator using a first index derived from the one or more satellite images, the one or more drone images and the tree growth data, wherein the first index represents a correlation with a vegetation health, a green biomass, a vegetation productivity, and an early indicator of a plant stress; compute a second indicator based on at least one of (i) a second index and (ii) an evenness of the second index using the one or more satellite images, and the LiDAR data; computing a third indicator based on an analysis of the soil moisture data, wherein the analysis of the soil moisture data comprises soil organic carbon in one or more decomposition stages; computing a fourth indicator based on a frequency of one or more adaptation practices derived from the IoT devices data, the one or more satellite images, and the one or more drone images; and computing a fifth indicator by using an Above Ground Biomass (AGB) and a Below Ground Biomass (BGB) being extracted from the second indicator and the weather data from one or more weather stations; and compute a climate smartness index of the urban forest region by using the plurality of indicators, wherein the climate smartness index indicates a percentage for classifying the urban forest region into at least one climate type.

In an embodiment, the AGB is computed using one or more diameter-breast-height (DBH) parameters measured from a pre-defined height above ground, and the BGB is computed based on a root-to-shoot relationship and the AGB.

In an embodiment, the fifth indicator represents a total carbon stock that is computed based on the AGB and the BGB.

In an embodiment, the fifth indicator represents an amount of carbon sequestrated by the urban forest region based on carbon being converted to carbon dioxide (CO2).

In an embodiment, the one or more satellite images comprises images of one or more forests captured from one or more satellites at one or more periodic intervals, the one or more drone images comprise information pertaining to at least a forest structure, and a tree health, wherein the LiDAR data comprises one or more three-dimensional (3D) maps of one or more forest canopies and a terrain created using one or more LiDAR laser pulses, the weather data from one or more weather stations comprises information pertaining to temperature, humidity, precipitation, and wind speed, the soil moisture data comprises information pertaining to a soil moisture level that provides water availability and soil health, the tree growth data comprises one or more tree growth rates measured by tracking one or more changes in an associated trunk diameter of one or more trees, and the IoT devices data comprises information of the urban forest region collected using one or more IoT sensors configured in the urban forest region.

In yet another aspect, there are provided one or more non-transitory machine-readable information storage mediums comprising one or more instructions which when executed by one or more hardware processors cause real-time monitoring of climate smartness of an urban forest region by receiving in real-time, an input data pertaining to an urban forest region from a plurality of sources, wherein the input data comprises (i) one or more satellite images, (ii) one or more drone images, (iii) Light Detection and Ranging (LiDAR) data, (iv) weather data from one or more weather stations, (v) soil moisture data, (vi) tree growth data, and (vii) Internet of Things (IoT) devices data; computing a plurality of indicators using the input data comprising computing a first indicator using a first index derived from the one or more satellite images, the one or more drone images and the tree growth data, wherein the first index represents a correlation with a vegetation health, a green biomass, a vegetation productivity, and an early indicator of a plant stress; compute a second indicator based on at least one of (i) a second index and (ii) an evenness of the second index using the one or more satellite images, and the LiDAR data; computing a third indicator based on an analysis of the soil moisture data, wherein the analysis of the soil moisture data comprises soil organic carbon in one or more decomposition stages; computing a fourth indicator based on a frequency of one or more adaptation practices derived from the IoT devices data, the one or more satellite images, and the one or more drone images; and computing a fifth indicator by using an Above Ground Biomass (AGB) and a Below Ground Biomass (BGB) being extracted from the second indicator and the weather data from one or more weather stations; and computing a climate smartness index of the urban forest region by using the plurality of indicators, wherein the climate smartness index indicates a percentage for classifying the urban forest region into at least one climate type.

In an embodiment, the AGB is computed using one or more diameter-breast-height (DBH) parameters measured from a pre-defined height above ground, and the BGB is computed based on a root-to-shoot relationship and the AGB.

In an embodiment, the fifth indicator represents a total carbon stock that is computed based on the AGB and the BGB.

In an embodiment, the fifth indicator represents an amount of carbon sequestrated by the urban forest region based on carbon being converted to carbon dioxide (CO2).

In an embodiment, the one or more satellite images comprises images of one or more forests captured from one or more satellites at one or more periodic intervals, the one or more drone images comprise information pertaining to at least a forest structure, and a tree health, wherein the LiDAR data comprises one or more three-dimensional (3D) maps of one or more forest canopies and a terrain created using one or more LiDAR laser pulses, the weather data from one or more weather stations comprises information pertaining to temperature, humidity, precipitation, and wind speed, the soil moisture data comprises information pertaining to a soil moisture level that provides water availability and soil health, the tree growth data comprises one or more tree growth rates measured by tracking one or more changes in an associated trunk diameter of one or more trees, and the IoT devices data comprises information of the urban forest region collected using one or more IoT sensors configured in the urban forest region.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system for real-time monitoring of climate smartness of an urban forest region, in accordance with an embodiment of the present disclosure.
FIG. 2 depicts an exemplary high level block diagram of the system of FIG. 1 for real-time monitoring of climate smartness of an urban forest region, in accordance with an embodiment of the present disclosure.
FIG. 3 depicts an exemplary flow chart illustrating a method for real-time monitoring of climate smartness of an urban forest region, using the systems of FIGS. 1-2, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The Food and Agriculture Organization (FAO) defines "forest" as land spanning more than 0.5 hectares with trees higher than 5 meters and a canopy cover of more than 10%, or trees able to reach those thresholds in situ, excluding land that is predominantly under agricultural or urban land use. Urban forestry is indeed a powerful nature-based solution for mitigating climate change, and it offers a range of environmental, social, and economic benefits. Unlike natural forests, Urban forestry presents a multifaceted approach to addressing climate change by improving carbon storage, air quality, and community resilience while providing social and economic benefits. Investment in urban green spaces is essential for sustainable urban development and climate change mitigation efforts. Urban forest ecosystem and nature capital is under threat due to climate change and the risks associated with extreme climate events are already posing several threats to forest and nature in the climate change scenario. Areas with high rates of population growth and natural resource degradation are likely to continue to have high rates of food insecurity. To cope with climate variability and change more effectively in the urban and peri-urban region, it is necessary to identify integrated adaptation and mitigation options for a range of forest ecosystem and green infrastructure.

There is an urgent need to integrate climate change concerns into enhance the provision of ecosystem services through better stewardship of soil and water resources while ensuring high levels of decisions made at tiny forest ecosystems such as specialization, allocation of resources and monitoring, measurement of climate smart indicators are crucial in determining sustainable management of forest and its ecosystem.

Recently urban forests and urban green spaces received much attention in combating climate change and reducing biodiversity loss. These urban forests (trees in gardens, parks, and along the streets, roads, canals, etc.) contribute to verdancy in the city play an important role in biodiversity conservation and are important in carbon sequestration. The climate smartness of urban forest is defined as the capacity of a tiny forest which contains the mixing of native, non-native trees, flowering plants, shrubs, climbers and rich biodiversity to respond to a disturbance by resisting damage or stress recovering quickly and sustainably. Unfortunately, these areas are also being sacrificed in the race for urbanization and there is an urgent need to restore these green patches. Restoration must be carefully planned as sometimes species are introduced that are harmful to the native flora. Thus, sustainable forest management practices are to be used to restore and protect the urban forest. Though the importance of forested areas in carbon sequestration has been well established and documented, few attempts have been made to address for measuring and monitoring climate smart indicators of urban forest in urban cities. Generally, in developing countries, where urbanization is most rapid, the collection of data is very important to represent the correct status of urban vegetation and its benefits. But it is important to understand the climate smart urban forest indicators of urban forest and garden and highlight the role of urban forests and green spaces as best nature-based solutions to mitigate climate change impacts at a local level.

Climate smart urban forest indicators are metrics used to evaluate the sustainable forest management in addressing climate change and to promote biodiversity, carbon sink potential, and enhancing urban forest ecosystem services. These are some key indicators commonly used to measure climate-smart urban forest indicators. Digital technology plays a crucial role in the monitoring and measuring the sustainable forest management in the urban and peri-urban regions/areas, enhancing the ability to assess tree health, growth, and environmental impacts etc.

Climate smart urban forest is a comprehensive concept where, within the margins of sustainable forest management, measures are sought that contribute to the mitigation of climate change. It includes reducing emissions of greenhouse gases, building resilience in existing forests, thus leading to an increase in urban green vegetation. Urban climate smart forests seek synergies with other policies such as enhancement of biodiversity, provision of ecosystem services from the tiny forests, and the establishment of a strong Nature-based Solution (NbS).

These indicators are derived from the satellite remotes sensing, Internet of Things (IoT) sensor data and ground data on urban forests on real time basis to understand the present status of climate smartness of urban forest. The urban forest smart indicators help to generate various insights of the forests which provide valuable suggestions(s) to manage long-term sustainability of the urban forests. The climate smartness of urban forest is defined as the capacity of an urban forest or garden to respond to a disturbance by resisting damage or stress and recovering quickly. In the present disclosure, systems and methods are provided for real time monitoring of a forest for sustainable management to mitigate climate change effects on the ecosystem. To monitor the climate smart indicators of an urban forest, various influencing factors for sustainable forest management are utilized by the systems and methods of the present disclosure such as forest health and resilience, biodiversity index, carbon sequestration, soil quality and adaptation measure implemented through hybrid methods. For instance, hybrid methods include but are not limited to drones equipped with high-resolution cameras and LiDAR used in the rainforest to monitor illegal logging and deforestation. Landsat programs such as (e.g., National Aeronautics and Space Administration (NASA) Landsat program) enable tracking global forest cover changes. Such approaches enable the system 100 to identify hotspots of deforestation and forest health. Geographic Information System (GIS) enables mapping forest biodiversity and plan sustainable logging practices. GIS integrates data from various sources to create detailed map of forest management and machine learning models are applied to analyse satellite imagery and detect illegal mining activities in forest in various regions (e.g., under developed and developing countries - say, India). However, for real time monitoring the forest climate smartness of an urban forest the systems and methods of the present disclosure also utilize satellite remote sensing data sources such as Sentinel-2, MODIS, ICE sat, LIDAR data, drone data and ground data to derive specific information such as forest area, forest vegetation, species diversity, soil quality, potential carbon sequestration and geo map of the urban forest to estimate climate smartness of the forest.

The urban forest ecosystems are particularly fragile and exposed to considerable risk due to the impact of urbanization on climate change, the presence of urban forests in diverse, unpredictable urban landscapes and the inherent fragmentation of the urban forest landscape. The climate smartness of an urban forest plays important role for healthy environment, climate adaptation and mitigation, enhance urban resilience, and improve environmental quality. The climate smartness of the forest is assessed using the following method and approach to estimate climate smartness:
a) Using satellite imagery and aerial photography to monitor urban forest health indicators
b) Field surveys are conducted on the ground to collect data on tree health, soil quality and biodiversity
c) Biomonitoring using the indicator species to assesses the ecological health of the forest

Finally, various indicators computed to assesses the smartness of the forest using index. This index represents as an overall score to measure and monitor climate smartness of an urban forest in meeting the requirement of sustainable forest management.

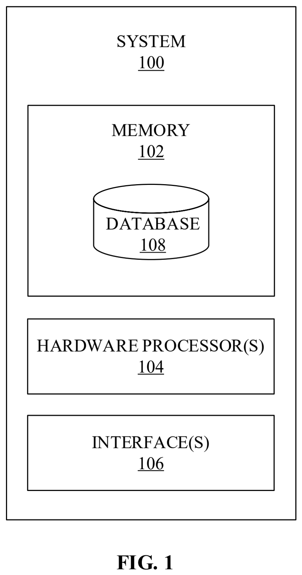

Referring now to the drawings, and more particularly to FIGS. 1 through 3, where similar reference characters denote corresponding features consistently throughout the figures, there are shown preferred embodiments, and these embodiments are described in the context of the following exemplary system and/or method.

FIG. 1 depicts an exemplary system 100 for real-time monitoring of climate smartness of an urban forest region, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to an urban forest region wherein the information includes but is not limited to (i) one or more satellite images, (ii) one or more drone images, (iii) Light Detection and Ranging (LiDAR) data, (iv) weather data from one or more weather stations, (v) soil moisture data, (vi) tree growth data, and (vii) Internet of Things (IoT) devices data, and the like. The database 108 further comprises a plurality of indicators that are used to estimate/compute a climate smartness index that enables the system 100 to classify the urban forest region into at least one climate type, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

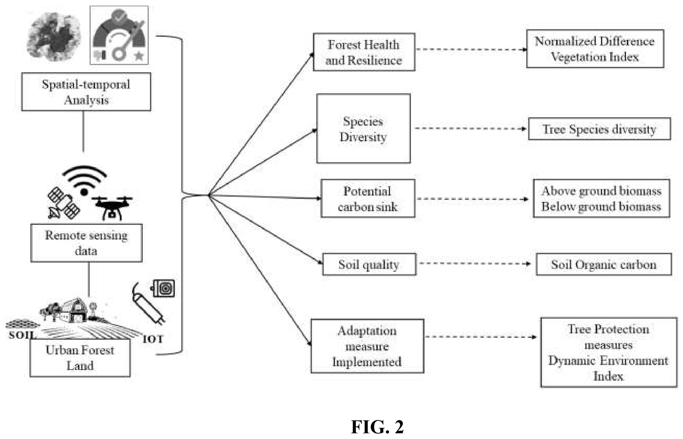

FIG. 2, with reference to FIG. 1, depicts an exemplary high level block diagram of the system 100 of FIG. 1 for real-time monitoring of climate smartness of an urban forest region, in accordance with an embodiment of the present disclosure.

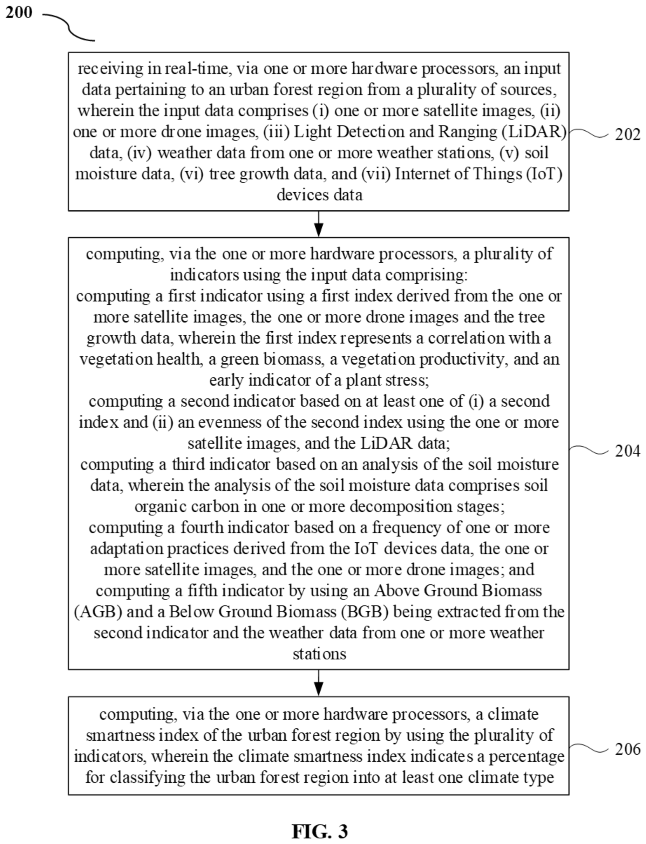

FIG. 3, with reference to FIGS. 1-2, depicts an exemplary flow chart illustrating a method for real-time monitoring of climate smartness of an urban forest region, using the systems 100 of FIGS. 1-2, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the block diagram of the system 100 depicted in FIG. 2, and the flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method of the present disclosure, the one or more hardware processors 104 receive input data pertaining to an urban forest region from a plurality of sources, wherein the input data comprises (i) one or more satellite images, (ii) one or more drone images, (iii) Light Detection and Ranging (LiDAR) data, (iv) weather data from one or more weather stations, (v) soil moisture data, (vi) tree growth data, and (vii) Internet of Things (IoT) devices data. For instance, the one or more satellite images comprise images of one or more forests captured from one or more satellites at one or more periodic intervals (e.g., say at every 'x' minutes, 'y' hours, and so on). The one or more drone images comprise information pertaining to at least a forest structure, a tree health, and so on. The LiDAR data comprises one or more three-dimensional (3D) maps of one or more forest canopies and a terrain created using one or more LiDAR laser pulses. The weather data from one or more weather stations comprises information pertaining to temperature, humidity, precipitation, wind speed, and the like. For instance, tropical forests exhibit unique weather parameters due to their ecological zones. Tropical rainforest maintains a consistent temperature throughout the year, that ranges from 20'C to 25'C (68' to 77 F'). The humidity levels are high, often exceeding 80% contributing to the lush vegetation and These regions receive abundant rainfall, averaging 200 cm to 400cm annually. The soil moisture data comprises information pertaining to a soil moisture level that provides water availability and soil health, and the like. Urban forest relies on local precipitation, which can vary widely depending on the region. For example, cities in tropical climates may receive bovver 200 cm of rainfall annually, while arid regions may get less than 50 cm. Urban Forest can intercept and absorb significant amount of storm water, reducing runoff and improving groundwater rechange rates. Healthy urban soils have an organic matter content of 3-5%, which supports tree growth and amicrobial activity, and urban soils often have a PH range of 6.0 to 7.5, which is suitable for most tree species. The tree growth data comprises one or more tree growth rates measured by tracking one or more changes in an associated trunk diameter of one or more trees. For instance, periodic measuring of the diameter at breast height (DBH) provides data on the annual or seasonal growth tree trunks. The IoT devices data comprises information of the urban forest region collected using one or more IoT sensors configured/installed in the urban forest region. Such information from the IoT devices/sensors enable the system 100 to continuously monitor DBH changes and provide real-time data on environmental conditions, biodiversity assessment, forest health and the like..

At step 204 of the method of the present disclosure, the one or more hardware processors 104 compute a plurality of indicators using the input data. In the present disclosure, the one or more hardware processors 104 compute a first indicator using a first index derived from the one or more satellite images, the one or more drone images and the tree growth data. The first index represents a correlation with a vegetation health, a green biomass, a vegetation productivity, and an early indicator of a plant stress. In the present disclosure, the first indicator is referred to as a forest vegetation condition indicator or forest vegetation index and is interchangeably used herein. The first index is referred to as a Normalized Difference Vegetation Index (NDVI) and is interchangeably used herein. The above step of computing the first indicator is better understood by way of following description:

Measuring forest health and resilience is crucial for understanding the climate smartness of the urban forest region and ecological balance of the forest ecosystem. Forest health and resilience status of the urban forest region helps to indicate the forest productivity and sustainable management of forest ecosystem. The system 100 uses aerial imagery or satellite data to determine the percentage of land covered by tree canopy, vegetation monitoring which rely on vegetation indices (VIs) and are compared with reflectance of vegetation in multiple spectral regions. The VIs derived from MODIS, Sentinel-2 as implemented by the system 100 provide efficient and straightforward means for qualitative and quantitative mapping of vegetation cover, health, leaf chlorophyll content, leaf area, canopy cover, and structure. The Normalized Difference Vegetation Index (NDVI) is estimated/computed/derived to monitor vegetation's greenness or health condition. It is derived from converse spectral response patterns of vegetation in a Near-Infrared Spectroscopy (NIR) technique and a specific indicator portion (e.g., say red portion) of the solar electromagnetic spectrum. The NDVI computed is herein expressed as below:$NDVI = NIR - Red / NIR + Red$

The NDVI shows a high correlation with vegetation health, green biomass, and vegetation productivity. Since the mesophyll layer's collapse occurs earlier than a decline in chlorophyll and before any visible changes, the NDVI is an early indicator of plant stress. NDVI values range from - 1 to +1, with values above 0 generally representing vegetation. Tree growth rate can be assessed using the first index (e.g., NDVI) as proxy indicators to forest health and resilience. Higher the NDVI means higher the tree health and high to the climate reliance. Below Table 1 illustrates tree growth rate condition, by way of exemplary values:

**Table 1**

| **Forest vegetation Index** | **Tree growth rate condition** |
|---|---|
| 0.1 -0.33 | Climate smart negative |
| 0.33-0.66 | Climate smart neutral |
| 0.66-1.00 | Climate smart positive |

Referring to step 204, once the first indicator is computed, the one or more hardware processors 104 then compute a second indicator based on at least one of (i) a second index and (ii) an evenness of the second index using the one or more satellite images, and the LiDAR data. More specifically, the second indicator is referred to as a Tree species diversity indicator or Tree diversity Index and is interchangeably used herein. The second index is referred to as a Shannon diversity index and is interchangeably used herein. The step of computing the second indicator is better understood by way of following description:

Tree Species diversity is another unit to function forest and plays a major role in maintaining the services and stability for urban forestry and Garden ecosystems. There are a variety of plant and animal species in the forest. For assessing the biodiversity of an urban forest, tree species diversity is a key indicator for a total urban forest sustainability, as forest trees provide habitat and resources for almost all other forest species within forest ecosystems to ensure ecological health. In the present disclosure, system 100 uses the satellite data from various sources such as MODIS, Sentinel-1,2, LiDAR and Landsat-8, etc. as known in the art to identify tree species diversity and its distribution in the planted location favorable for native species and non-native tree species to estimate species diversity. Native and non-native tress often exhibit distinct spectral signature bands (for e.g., near-infra red and red-edge bands) and hyper spectral sensors like AVIRIS-NG have achieved classification accuracies of up to 98.7% for distinguishing native and non-native tree species in the location. High resolution satellite imagery, such as WordView-2 can differentiate between tree species based on spectral signature. This helps the system 100 to identify native and anon-native species in the urban forests. Remote sensing enables the monitoring of changes in tree distribution over time, such as the spread of invasive, non-native species or decline of native species. A higher diversity of tree species leads to greater resilience to disturbances like pests, diseases, and climate extremes. The number of species of plants and animals that are present in a region constitutes their species diversity. Areas that are rich in species diversity are called 'hotspots' of diversity.

Species diversity and equitability were calculated for the sampled plot sites collectively by the Shannon's diversity index (H) and Shannon's evenness (EH) respectively, which is expressed by way of following equation: $H = {\sum }_{i = 1}^{s} Pi In Pi$ where *H* is the Shannon diversity index; *Pi* is the fraction of the entire population made up of species *i; S* is the numbers of species encountered; *Σ* is the sum from species 1 to species *S*

The Shannon diversity index (*H*) is used to characterize species diversity of a community. This index considers both abundance and evenness of the species present. Shannon's equitability (EH) calculated by dividing *H* by Hmax (where *Hmax* = *InS*)*.* Shannon's evenness $\left(EH\right) = \frac{H}{Hmax} = H / InS$*.* Species richness is estimated directly by totaling the number of species recorded in each plot (the plot not shown in FIGS.). Table 2 illustrates the second index (e.g., Shannon diversity index) with exemplary values for enabling the system 100 to classify the urban forest region.

**Table 2**

| **Shannon Diversity Index** | **Climate smartness** |
|---|---|
| 0.1 -1.5 | Climate smart negative |
| 1.5-2.5 | Climate smart neutral |
| 2.5-4.00 | Climate smart positive |

The system 100 enables establishing plantations with a mix of tree species rather than monocultures. Mixed-species forests are more resilient to pests, disease, and extreme weather events. Moving tree species to areas with more suitable climate conditions. This can help maintain forest health and productivity under changing conditions. In the present disclosure, the tree species diversity index uses Generative Adversarial Networks (GANs) (not shown in FIGS.) to simulate various forestry scenarios, helping predict the outcomes of DAMI to different management strategies and potential impacts of climate change. Further, by accurately modelling urban forest carbon density and climate smartness, Generative AI tools comprised in the database 108 and when invoked for execution by the system 100 can support climate change mitigation strategies. For instance, the best species mix are simulated by the system 100 to maximize ecosystem services and generate scenarios (by using GenAI tools known in the art) for enhancing habitat connectivity in urban forest. The system 100 implements tools such as, but are not limited to, one or more Generative Adversarial Networks (GANs) to synthesize the species mix in the certain gap areas that could get created with partial information available due to cloud cover and such phenomena that might hamper clarity of image obtained with remote sensing.

Referring to the step 204, after the second indicator being computed, the one or more hardware processors 104 compute a third indicator based on an analysis of the soil moisture data, wherein the analysis of the soil moisture data comprises soil organic carbon in one or more decomposition stages. In the present disclosure, the third indicator is referred to as soil quality indicator or soil organic carbon level/index and is interchangeably used herein. The step of computing the third indicator is better understood by way of following description:

Assessing soil quality is crucial for understanding the health for sustainable management of the urban forest region. The soil sample is collected from different locations and depths and is tested for PH, nutrient content, organic matter, and so on. The system 100 measures soil composition, moisture levels and nutrient content that are critical for assessing the soil health and its ability to support forest growth and resilience. Improving forest soil quality involves several practices aimed at enhancing soil health, fertility and structure etc. Forest soil organic carbon measured at plot level once in a year and categorised in the below threshold level as provided by way of exemplary values:

Further, soil organic matter/carbon (SOC) is the fraction of the soil that consists of plant or animal tissue in various stages of breakdown (decomposition). SOC is a key indicator of soil health wherein SoC refers to the carbon component of organic compounds present in the soil. It is a critical indicator of soil health. The optimum range of soil organic carbon (SOC) content is considered to be between 'a%' and 'b%' (e.g., values of a and b are 1% and 6% respectively) of the total mass of topsoil. It is to be understood by a person having ordinary skill in the art or person skilled in the art that such range of SOC shall not be construed as limiting the scope of the present disclosure. The accuracy of measuring SOC is through direct field sampling followed by laboratory analysis every year and results can be classified into one or more levels (e.g., say three levels) and factored into the equation. Below Table 3 illustrates range of SOC, by way of examples:

**Table 3**

| Sl. No | Category | Range (%) |
|---|---|---|
| 1 | 1-3 | Low |
| 2 | 3-6 | Medium |
| 3 | >6 | High |

Forest soil organic carbon (SOC) accumulation is influenced by a complex interplay of biotic and abiotic factors, including climate, vegetation type, soil properties, and disturbances. The value ranges as mentioned above include but are not limited to, High (3), Medium (2), and Low (1). If the SOC level is low and it is not resilient to climate change and less climate smartness followed by medium and high to resilience to climate change impacts.

Referring to the step 204, after computing the third indicator, the one or more hardware processors 104 compute a fourth indicator based on a frequency of one or more adaptation practices derived from the IoT devices data, the one or more satellite images, and the one or more drone images. The fourth indicator is referred to as a dynamic adaptation measure implemented (DAMI) indicator or Dynamic adaptation management Index and is interchangeably used herein. The above step of computing the fourth indicator is better understood by way of following description:

Urban forestry involves the management of trees in urban environments to improve quality of life for residence. Adaptive management is a dynamic approach to forest management in which changing conditions are monitored and practices modified accordingly. For instance, practices such as adaptive management may enable the system 100 to implement and address uncertainties in climate impacts on forests and adapt strategies to meet the changing needs of urban environment and ecology. It explicitly addresses complex and uncertain situations and is seen as part of an appropriate overall response to climate change, including in the forest sector. Tracking the adoption of practices that enhance the ability of urban forests communities to adapt to climate change, such as pruning, application of manure to improve forest health or vegetation density, etc. Below are a few adaptation measures implemented in the urban forest region to address challenges such as climate smartness of the forest.
1) Conducting regular health assessment of urban trees to identify and address issues early in the stages.
2) Pruning and care: Implementation of proper pruning techniques and care practices to maintain tree health and safety.

Dynamic adaptation measure implemented index is a measure used to evaluate the overall health for sustainable management of forest considering various dynamic parameters like vegetation condition of the trees, sustainable practices followed by the caretaker during the year. To estimate DAMI of the urban forest region, data from various sources including manual collection of data using existing data bases, IOT sensors, images from drones, and remote sensing to analyse the data for calculating the index-based approach are gathered to estimate the climate smartness of the forest. DAMI is estimated by way of the following expression.$DAMI = \left(Number of practices followed/number of practices proposed\right) * 100$

Below Table 4 illustrates the DAMI range by way of examples:

**Table 4**

| Sl. No | Range (%) | Category |
|---|---|---|
| 1 | 25-50 | Low |
| 2 | 50-75 | Medium |
| 3 | >75 | High |

As mentioned above, the system 100 continues to monitor forest conditions and adjust management practices based on the data collected. This can involve using remote sensing, field surveys- and field observations. Adaptive management in forestry involves implementing flexible strategies that can be adjusted based on ongoing monitoring and measurements. The system 100 further extends its implementation of Generative AI (GenAI) that can suggest appropriate tree species based on urban conditions, such as soil, climate, and surrounding infrastructure. This helps ensure diverse and resilient urban forests that can adapt to changing conditions. Such GenAI tools are stored in the database 108/memory 102 and are invoked for execution for generating recommendations/suggestions as mentioned above. Such tools can further provide forest managers with actionable insights and recommendations based on real-time data. This helps in making informed decisions about forest management practices, conservation efforts, and climate smartness of forest. The knowledge base corresponding to the recommendations could be stored in the database 108/memory 102 and associated filesystem (not shown in FIGS.) and utilized for tuning the underlying model architecture with appropriate prompt engineering to respond with the recommendations.

Referring to the step 204, after computing the fourth indicator, the one or more hardware processors 104 compute a fifth indicator by using an Above Ground Biomass (AGB) and a Below Ground Biomass (BGB) that is extracted from the second indicator and the weather data from one or more weather stations. The fifth indicator is referred to as a potential carbon sequestration indicator or Forest carbon density Index and is interchangeably used herein. The fifth indicator represents a total carbon stock that is computed based on the AGB and the BGB. Further, the fifth indicator represents an amount of carbon sequestrated by the urban forest region based on carbon that is converted to carbon dioxide (CO2). The AGB is computed using one or more diameter-breast-height (DBH) parameters measured from a pre-defined height above ground (e.g., say 'p' meter above ground surface/level, where value of p=1.3 meters). It is to be understood by a person having ordinary skill in the art or person skilled in the art that such value of the pre-defined height shall not be construed as limiting the scope of the present disclosure. The BGB is computed based on a root-to-shoot relationship and the AGB. The step of computing the fifth indicator is better understood by way of following description:

Measurement of the amount of carbon stored in forest biomass, soils, and so on indicate the capacity of forests to mitigate climate change. The system 100 uses satellite imagery and aerial photography to monitor urban forest health indicators for calculating the current carbon stock in aboveground and belowground pools of trees. In addition to this, every year the level of carbon stock of an urban forest is estimated after and before completion of forest care activities with the help of dynamic adaptation implemented index at plot level. To measure carbon stock in the urban forest region, the system 100 collects tree inventory data in the following steps
i) Tree identfication : Tree identify and catalog all trees in the forest
ii) Diameter at Breast height : measure the daimeter of each treeat 1.3 meter above ground
iii) Tree height : - Measure the height of the each tree using mobile tool

After collection tree data, the system 100 use the known in the art species specific allomteric equations to estimate the above-ground biomass from DBH and height measurement. The ground biomass can be estimated using root-shoot ratio or specific equations. A carbon fraction (usually 50%) is applied to the biomass to estimate the carbon stock. The system 100 also collects soil sample at various depth and analyses the soil samples for organic carbon contant to estimate soil organic carbon. This is done at forest level (e.g., say once in a year) to monitor carbon sequestered per year.

To calculate tree wise carbon stock, the basal area of tree is a main driver for AGB/C estimation, and the system 100 calculated the same using the following equation:
BA=Basal area (m2 ), D=DBH (cm) and π=pi, and the total BA for each plot is obtained by adding the Basal Area of all trees in the forest as: $BA = \left({πD}^{2}\right)$

Aboveground biomass (AGB) is estimated using the below equation for tropical dry forests, and is expressed as follows: $\left(AGB\right) est = p \times exp - 0.667 + 1.784 In \left(D\right) + 0.207 \left(In\left(D\right)\right) \left(2\right) 2 - 0.281 \left(In\left(D\right)\right)$

It is possible to determine BGB by multiplying AGB by a factor of 0.26 based on the root-to-shoot ratio relationship, which is expressed as: $BGB = AGB \times 0.26$

Biomass assessment is used to enumerate the amount of carbon stock and it is calculated as: $Total carbon stock = AGB + BGB .$

Plant total biomass has direct relationship with the amount of carbon content in wood, and it was noticed that carbon varied between 45 to 50% for various ecosystems and it was assumed that all biomass pool contained 47.5%. $Carbon \left(C\right) = AGB + BGB \times 0.475$ T is carbon was converted to carbon dioxide (CO2) to estimate the amount of carbon sequestrated by the urban forest region.
Tis correlation is given as: 1 t C=3.67 t CO2 )CO2 sequestered by each forest which is quantifed by multiplying the carbon stock value by 3.67 i.e., atomic weight diference of C and CO2. Based on the above the system 100 calculates forest carbon density in the urban forest.

According to a climate governing entity (e.g., IPPC (2006)) carbon pools in forest ecosystems comprise carbon stored in the living trees aboveground and belowground (roots). Above-ground biomass includes but are not limited to, all living biomass above the soil including stem, branches, bark, seeds, and foliage. Living biomass of live roots includes fine roots (< 2 mm diameter), small roots (2 - 10 mm diameter), and large roots (> 10 mm diameter) being extracted from the second indicator, third indicator and the weather data from one or more weather stations. To calculate tree wise carbon the system 100 employs non-invasive techniques like LiDAR or drones, etc. Tree parameters such as tree diameter at breast height (DBH), height and species identification are estimated. Allometric equations as known in the art are applied to tree species to calculate above ground and below ground biomass. The biomass data is converted to carbon stock using conversion factors (commonly 0.47 for forest).

Data from all carbon pools are combined to estimate the total forest carbon stock. This is expressed in units like megagrams of carbon per hectare (Mg C/ha)

The carbon density is one of idicators to asseses climate smartness of a urban forest region. Forest carbon density is classified based on the amount of carbon they store per unit area. This classification helps in understanding the carbon sequestration potential of different forest types and enables the system 100 to guide conservation and management efforts.
i) Low Carbon Density (1):These forests have low biomass and carbon storage.
ii) Moderate Carbon Density (2) :These forests have moderate levels of biomass and carbon storage.
iii) High Carbon Density (3):These forests have high biomass and carbon storage.

At step 206 of the method of the present disclosure, the one or more hardware processors 104 computes a climate smartness index of the urban forest region by using the plurality of indicators. In other words, the climate smartness index is computed using the first indicator, the second indicator, the third indicator, the fourth indicator and the fifth indicator. The climate smartness index indicates a percentage for classifying the urban forest region into at least one climate type. For instance, the climate type includes but is not limited to, a positive climate, a neutral climate, a negative climate and so on.

The above step 206 of computing the climate smartness index is better understood by way of the following description:
More specifically, the system 100 determines the climate smartness index of the urban forest region at the end of the year. This is done based on calculating index value which is a combination (sum of) of the plurality of indicators and a confidence level weightage for climate smartness index. The score is given by: $Climate Smartness Index = \left(\begin{matrix}{\sum }_{i = 1}^{4} FVCi + {TSDI}_{i} + {SOC}_{i} + DAMI + \\ PCS\end{matrix}\right) / 100$ where *FVCi* (the first indicator), *TSDi* (the second indicator), *SOCi* (the third indicator), *DAMI* (the fourth indicator), and *PCS* (the fifth indicator) are Forest Vegetation condition, Tree species diversity, Soil organic carbon, Dynamic Adaptation Management Index, and Potential carbon index for ith factor as per the equation. The climate smartness index of the urban forest region calculated in the percentage enables the system 100 to classify the forest smartness as a positive climate, a neutral climate, and/or a negative climate. Climate smartness indexes a set of exemplary values that aim to balance environmental, social, and economic goals while addressing climate change. By integrating these values into climate smart urban forest, Climate smartness index/indicator of urban forest region aims to not only combat climate change but also ensure urban forest remains vital for generations to come. Below Table 5 illustrates the plurality of indicators in percentage values for computing the climate smartness indicator/index for classifying the urban forest region into at least one climate type (e.g., refer to the last 3 rows in the below Table 5 for classification).

**Table 5**

| **Indicators name** | **Percentage (%)** |
|---|---|
| Forest vegetation index | 50 |
| Tree diversity Index | 50 |
| Soil organic carbon level | 75 |
| Dynamic adaptation management Index | 75 |
| Forest carbon density Index | 75 |
| **Climate smartness Index** | **65** |
| Climate Negative | 25-50 |
| Climate Neutral | 50-75 |
| Climate Positive | >75 |

Below are a few parameters that are compared with reference to urban forest region and Non-urban forest region. Such parameters shall not be construed as limiting the scope of the present disclosure. The below comparison is performed to highlight some of the challenges involved in computing climate smartness index using various indicators as described above the system 100 and method of the present disclosure.
1. Location and Setting: Urban Forest regions are situated within or near urban areas, such as cities or towns. It includes trees, green spaces, and vegetation found in parks, gardens, streets, public spaces, and private properties in urban settings. Non-urban forest, often referred to as a natural or wild forest, is in rural or non-urban areas, away from significant human development. These forests are typically part of a larger ecosystem and can encompass various wilderness areas, national parks, or rural landscapes.
2. Human Influence and Development: Urban forests are influenced and shaped by human activities, urban planning, land use, and development. These are subjected to human interventions, such as tree planting, landscaping, maintenance, and management to suit urban needs and aesthetics. Non-urban forests are less influenced by direct human activities, especially in terms of land development and urbanization. These are more natural and tend to follow ecological processes and evolutionary dynamics.
3. Tree species composition: Urban forests often feature a diverse mix of tree species, including both native and non-native species. The selection of species may be influenced by factors such as aesthetics, climate adaptability, ease of maintenance and so on. Non-urban forests typically host a more diverse range of native tree species that have adapted to the specific local ecological conditions over time.
4. Ecosystem and Biodiversity: Urban forests contribute to local biodiversity and provide habitats for various flora and fauna, although the biodiversity might be influenced or altered by urbanization and the presence of non-native species. Non-urban forests tend to have higher levels of biodiversity with more complex ecosystems, hosting a wide range of plant and animal species adapted to the natural environment.
5. Management and Planning: Urban forests require active management, planning, and maintenance to sustainably address the needs of the urban population. Management includes pruning, disease control, tree planting programs, and environmental monitoring. Management practices in non-urban forests often focus on conservation, protection, and sustainable use, guided by ecological principles and policies.

Understanding these differences is crucial for effective management, conservation, and sustainable development of both urban and non-urban forests, wherein each of these plays a vital role in supporting environmental health, biodiversity, and overall community well-being.

Hence, considering the above-mentioned parameters, the environmental challenges in urban forests differ vastly from mountain forests, requiring a fundamentally different model to assess climate smartness. Conventional approaches cannot be directly applied to urban settings because such conventional approaches lack real-time adaptation tracking (DAMI), urban stressor analysis (pollution, Urban Heat Island (UHI)), and fine-scale fragmented ecosystem monitoring. Further, conventional approaches use a soil sensitivity index (SSI) to assess urban forest sustainability, focusing primarily on soil degradation indicators. The method of the present disclosure estimates/computes a climate smartness index that is an integration of multiple indicators beyond soil health, including NDVI for vegetation health, Shannon index for biodiversity, DAMI for adaptation tracking, and artificial intelligence (AI)-driven carbon sequestration modeling, providing a holistic assessment. Furthermore, conventional approaches evaluate urban forests using a set of pre-defined indicators that are measured manually and applied across various urban forest types. The system 100 and the method of the present disclosure integrate real-time IoT sensors, remote sensing, and AI-powered models to monitor continuous environmental changes, thus allowing for dynamic adaptation and predictive analytics. This refrains the system 100 from referring it to as just a retrospective trend analysis but rather is referred to as an active, real-time assessment of climate smartness in urban forests, which integrates multiple environmental indicators beyond NDVI. Moreover, conventional apparoches are focused on peri-urban forests, where forests undergo natural regeneration, clear-cutting, or different silvicultural interventions over decades. The primary concern is forest management efficiency in carbon storage. The system 100 and the method of the present disclosure target urban forest regions, where climate adaptation requires high-resolution spatial analysis of fragmented green spaces, considering UHI effects, pollution absorption, and microclimate variability which are critical factors that are not addressed in the convention systems and approaches.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving in real-time, via one or more hardware processors, an input data pertaining to an urban forest region from a plurality of sources (202), wherein the input data comprises (i) one or more satellite images, (ii) one or more drone images, (iii) Light Detection and Ranging (LiDAR) data, (iv) weather data from one or more weather stations, (v) soil moisture data, (vi) tree growth data, and (vii) Internet of Things (IoT) devices data;
computing, via the one or more hardware processors, a plurality of indicators using the input data comprising (204):
computing a first indicator using a first index derived from the one or more satellite images, the one or more drone images and the tree growth data, wherein the first index represents a correlation with a vegetation health, a green biomass, a vegetation productivity, and an early indicator of a plant stress;
computing a second indicator based on at least one of (i) a second index and (ii) an evenness of the second index using the one or more satellite images, and the LiDAR data;
computing a third indicator based on an analysis of the soil moisture data, wherein the analysis of the soil moisture data comprises soil organic carbon in one or more decomposition stages;
computing a fourth indicator based on a frequency of one or more adaptation practices derived from the IoT devices data, the one or more satellite images, and the one or more drone images; and
computing a fifth indicator by using an Above Ground Biomass (AGB) and a Below Ground Biomass (BGB) being extracted from the second indicator and the weather data from one or more weather stations; and computing, via the one or more hardware processors, a climate smartness index of the urban forest region by using the plurality of indicators, wherein the climate smartness index indicates a percentage for classifying the urban forest region into at least one climate type (206).

2. The processor implemented method as claimed in claim 1, wherein the AGB is computed using one or more diameter-breast-height (DBH) parameters measured from a pre-defined height above ground, and wherein the BGB is computed based on a root-to-shoot relationship and the AGB.

3. The processor implemented method as claimed in claim 1, wherein the fifth indicator represents a total carbon stock that is computed based on the AGB and the BGB.

4. The processor implemented method as claimed in claim 1, wherein the fifth indicator represents an amount of carbon sequestrated by the urban forest region based on carbon being converted to carbon dioxide (CO2).

5. The processor implemented method as claimed in claim 1, wherein the one or more satellite images comprises images of one or more forests captured from one or more satellites at one or more periodic intervals, wherein the one or more drone images comprise information pertaining to at least a forest structure, and a tree health, wherein the LiDAR data comprises one or more three-dimensional (3D) maps of one or more forest canopies and a terrain created using one or more LiDAR laser pulses, wherein the weather data from one or more weather stations comprises information pertaining to temperature, humidity, precipitation, and wind speed, wherein the soil moisture data comprises information pertaining to a soil moisture level that provides water availability and soil health, wherein the tree growth data comprises one or more tree growth rates measured by tracking one or more changes in an associated trunk diameter of one or more trees, and wherein the IoT devices data comprises information of the urban forest region collected using one or more IoT sensors configured in the urban forest region.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive in real-time, an input data pertaining to an urban forest region from a plurality of sources, wherein the input data comprises (i) one or more satellite images, (ii) one or more drone images, (iii) Light Detection and Ranging (LiDAR) data, (iv) weather data from one or more weather stations, (v) soil moisture data, (vi) tree growth data, and (vii) Internet of Things (IoT) devices data;
compute a plurality of indicators using the input data comprising:
computing a first indicator using a first index derived from the one or more satellite images, the one or more drone images and the tree growth data, wherein the first index represents a correlation with a vegetation health, a green biomass, a vegetation productivity, and an early indicator of a plant stress;
computing a second indicator based on at least one of (i) a second index and (ii) an evenness of the second index using the one or more satellite images, and the LiDAR data;
computing a third indicator based on an analysis of the soil moisture data, wherein the analysis of the soil moisture data comprises soil organic carbon in one or more decomposition stages;
computing a fourth indicator based on a frequency of one or more adaptation practices derived from the IoT devices data, the one or more satellite images, and the one or more drone images; and
computing a fifth indicator by using an Above Ground Biomass (AGB) and a Below Ground Biomass (BGB) being extracted from the second indicator and the weather data from one or more weather stations; and
compute a climate smartness index of the urban forest region by using the plurality of indicators, wherein the climate smartness index indicates a percentage for classifying the urban forest region into at least one climate type (206).

7. The system as claimed in claim 6, wherein the AGB is computed using one or more diameter-breast-height (DBH) parameters measured from a pre-defined height above ground, and wherein the BGB is computed based on a root-to-shoot relationship and the AGB.

8. The system as claimed in claim 6, wherein the fifth indicator represents a total carbon stock that is computed based on the AGB and the BGB.

9. The system as claimed in claim 6, wherein the fifth indicator represents an amount of carbon sequestrated by the urban forest region based on carbon being converted to carbon dioxide (CO2).

10. The system as claimed in claim 6, wherein the one or more satellite images comprises images of one or more forests captured from one or more satellites at one or more periodic intervals, wherein the one or more drone images comprise information pertaining to at least a forest structure, and a tree health, wherein the LiDAR data comprises one or more three-dimensional (3D) maps of one or more forest canopies and a terrain created using one or more LiDAR laser pulses, wherein the weather data from one or more weather stations comprises information pertaining to temperature, humidity, precipitation, and wind speed, wherein the soil moisture data comprises information pertaining to a soil moisture level that provides water availability and soil health, wherein the tree growth data comprises one or more tree growth rates measured by tracking one or more changes in an associated trunk diameter of one or more trees, and wherein the IoT devices data comprises information of the urban forest region collected using one or more IoT sensors configured in the urban forest region.

11. One or non-transitory machine-readable information storage mediums comprising one or more instructions which when executed by one or more hardware processors cause:
receiving in real-time, an input data pertaining to an urban forest region from a plurality of sources, wherein the input data comprises (i) one or more satellite images, (ii) one or more drone images, (iii) Light Detection and Ranging (LiDAR) data, (iv) weather data from one or more weather stations, (v) soil moisture data, (vi) tree growth data, and (vii) Internet of Things (IoT) devices data;
computing a plurality of indicators using the input data comprising:
computing a first indicator using a first index derived from the one or more satellite images, the one or more drone images and the tree growth data, wherein the first index represents a correlation with a vegetation health, a green biomass, a vegetation productivity, and an early indicator of a plant stress;
computing a second indicator based on at least one of (i) a second index and (ii) an evenness of the second index using the one or more satellite images, and the LiDAR data;
computing a third indicator based on an analysis of the soil moisture data, wherein the analysis of the soil moisture data comprises soil organic carbon in one or more decomposition stages;
computing a fourth indicator based on a frequency of one or more adaptation practices derived from the IoT devices data, the one or more satellite images, and the one or more drone images; and
computing a fifth indicator by using an Above Ground Biomass (AGB) and a Below Ground Biomass (BGB) being extracted from the second indicator and the weather data from one or more weather stations; and
computing a climate smartness index of the urban forest region by using the plurality of indicators, wherein the climate smartness index indicates a percentage for classifying the urban forest region into at least one climate type.

12. The one or more non-transitory machine-readable information storage mediums as claimed in claim 11, wherein the AGB is computed using one or more diameter-breast-height (DBH) parameters measured from a pre-defined height above ground, and wherein the BGB is computed based on a root-to-shoot relationship and the AGB.

13. The one or more non-transitory machine-readable information storage mediums as claimed in claim 11, wherein the fifth indicator represents a total carbon stock that is computed based on the AGB and the BGB.

14. The one or more non-transitory machine-readable information storage mediums as claimed in claim 11, wherein the fifth indicator represents an amount of carbon sequestrated by the urban forest region based on carbon being converted to carbon dioxide (CO2).

15. The one or more non-transitory machine-readable information storage mediums as claimed in claim 11, wherein the one or more satellite images comprises images of one or more forests captured from one or more satellites at one or more periodic intervals, wherein the one or more drone images comprise information pertaining to at least a forest structure, and a tree health, wherein the LiDAR data comprises one or more three-dimensional (3D) maps of one or more forest canopies and a terrain created using one or more LiDAR laser pulses, wherein the weather data from one or more weather stations comprises information pertaining to temperature, humidity, precipitation, and wind speed, wherein the soil moisture data comprises information pertaining to a soil moisture level that provides water availability and soil health, wherein the tree growth data comprises one or more tree growth rates measured by tracking one or more changes in an associated trunk diameter of one or more trees, and wherein the IoT devices data comprises information of the urban forest region collected using one or more IoT sensors configured in the urban forest region.
